# EUROPEAN PATENT APPLICATION

(11) **EP 2 062 762 A1**
(43) Date of publication of application: **27.05.2009**
(21) Application number: 07806807.9
(22) Date of filing: 06.09.2007
(51) Int. Cl.: B60H 1/32, B60H 1/00

(54) **DRAINAGE STRUCTURE FOR VEHICLE AIR CONDITIONER**

(30) Priority: 08.09.2006 JP 2006244200
(71) Applicant: Calsonic Kansei Corporation, Saitama-shi Saitama 331-8501 (JP)
(72) Inventor: KAMEYAMA, Kouichi, Saitama-shi, Saitama 331-8501 (JP)
(74) Representative: Köhler, Walter
(86) International application number: PCT/JP2007/067366
(87) International publication number: WO 2008/029867

(57) **Abstract**

A drainage structure for a vehicle air conditioner includes an intake duct (2) for sucking at least one of inside and outside air, a centrifugal fan (4) in which a motor rotation axis (ML) is oriented horizontally, an evaporator (6) disposed in a middle of an air flow passage (7) communicating with a discharge side of the centrifugal fan (4), a drain pipe (9) which discharges, to the outside, condensate water attached to an outer fin (67) of the evaporator (6), a first drainage hole (10) for connecting a bottom wall surface of the intake duct (2) and a lower portion of a scroll casing (41) of the centrifugal fan (4), and a second drainage hole (11, 12) for connecting the lower portion of the scroll casing (41) and an upper portion of the evaporator (6).

## Description

### Technical Field

The present invention relates to a drainage structure for a vehicle air conditioner and including an intake duct, a centrifugal fan, an evaporator, and an outer discharge structure to discharge, to the outside, water flowing along a bottom wall surface of the intake duct.

### Background Art

As a prior-art drainage structure for a vehicle air conditioner, there is a known one provided with a guide passage for guiding water stored in a bottom wall portion of an intake duct into a blower by differential pressure between the blower and the intake duct (see Patent Document 1, for example).

In this drainage structure, the blower blows water guided into the blower by the differential pressure. Then, the water is captured by an evaporator and discharged from a drain pipe below the evaporator as condensate water. As a result, it is possible to provide a vehicle air conditioner for preventing rain water from being stored in the intake duct without providing the drain pipe to the intake duct.
Patent Document 1: Japanese Patent Application Laid-open NO. 2004-98782

### Disclosure of the Invention

### Problem to be Solved by the Invention

However, the prior-art drainage structure for the vehicle air conditioner discharges, to the outside, the water guided into the blower by using air blow obtained by operation of the blower and therefore it is impossible to discharge, to the outside, the water guided into the blower when the blower is not operating.

In a blower disposed with a motor rotation axis oriented horizontally, a winding angle of a scroll casing is about 300° and therefore, if snow or drops of water attached to an inner face of the intake duct turns (turn) into water to flow along a duct bottom wall surface in the nonoperating state of the blower, the water is stored in a lower portion of the scroll casing. If the stored water freezes, it may damage the blower.

The present invention has been made with the above problems in view and it is an object of the invention to provide a drainage structure for a vehicle air conditioner having a simple structure without an additional drain structure and discharging, to the outside, water trying to stay in a lower portion of a scroll casing whether or not a centrifugal fan is operating.

### Means for Solving the Problem

To achieve the above object, according to the present invention, there is provided a drainage structure for a vehicle air conditioner, the structure including: an intake duct for sucking at least one of inside and outside air; a centrifugal fan to a suction side of which the intake duct is coupled and in which a motor rotation axis is oriented horizontally; an evaporator disposed in a middle of an air flow passage communicating with a discharge side of the centrifugal fan; and an outer discharge structure provided to a main body case for housing the evaporator to discharge, to the outside, condensate water attached to an outer fin of the evaporator. The drainage structure is provided with a first connecting portion for connecting a bottom wall surface of the intake duct and a lower portion of a scroll casing of the centrifugal fan and a second connecting portion for connecting the lower portion of the scroll casing and an upper portion of the evaporator.

### Effects of the Invention

Therefore, in the invention, when the snow or drops of water attached to or mixed into the intake duct turns (turn) into water to flow along the duct bottom wall surface in the nonoperating state of the centrifugal fan, the flowing water is led from the duct bottom wall surface into the lower portion of the scroll casing of the centrifugal fan through the first connecting portion, is led from the lower portion of the scroll casing to the upper portion of the evaporator through the second connecting portion, runs down the evaporator from the upper portion of the evaporator, and is discharged outside from the outer discharge structure of the main body case for discharging the condensate water of the evaporator.
When the snow or drops of water attached to or mixed into the intake duct turns (turn) into water to flow along the duct bottom wall surface in the operating state of the centrifugal fan, the flowing water is led from the duct bottom wall surface into the lower portion of the scroll casing of the centrifugal fan through the first connecting portion, led along the inner face of the scroll casing by the fan air pressure, and then captured by the evaporator via the air flow passage on the discharge side. The captured water runs down the evaporator and is discharged outside from the outer discharge structure of the main body case for discharging condensate water of the evaporator.
As described above, in the drainage structure of the invention, the existing outer discharge structure for discharging the condensate water of the evaporator is utilized. As a result, only the first connecting portion and the second connecting portion need be added and a new drain structure need not be added, which makes the drainage structure simple.
Moreover, it is possible to discharge, to the outside, the water trying to stay in the lower portion of the scroll casing whether or not the centrifugal fan is operating.

### Brief Description of the Drawings

Fig. 1 is a sectional view along a direction of a motor rotation axis and showing a vehicle air conditioner to which a drainage structure of an embodiment 1 is applied.
Fig. 2 is an enlarged sectional view of first and second connecting portions in Fig. 1 in the drainage structure of the embodiment 1.
Fig. 3 is a sectional view along a direction orthogonal to the motor rotation axis and showing the vehicle air conditioner to which the drainage structure of the embodiment 1 is applied.
Fig. 4 is an enlarged sectional view of the second connecting portion in Fig. 3 in the drainage structure of the embodiment 1.
Figs. 5(a) and 5(b) are a front view and a plan view of an evaporator in the drainage structure in the embodiment 1.
Fig. 6 is an exploded perspective view of the evaporator in the drainage structure in the embodiment 1.
Fig. 7 is a drawing for explaining drainage operation during operation of a centrifugal fan in the drainage structure of the embodiment 1.
Fig. 8 is a drawing showing a prior-art vehicle air conditioner including a special drain hose for an intake.
Fig. 9 is a drawing showing water stored in a lower portion of a scroll casing in a prior-art vehicle air conditioner including a centrifugal fan having the scroll casing with a winding angle of about 300°.

### Explanation of Reference Numerals

- 1: inside and outside air introducing duct
- 2: intake duct
- 2a: first inclined bottom wall surface
- 2b: second inclined bottom wall surface
- 3: clean filter
- 4: centrifugal fan
- 41: scroll casing
- 42: blower fan
- 43: fan motor
- 5: main body case
- 6: evaporator
- 61: windward side upper header tank
- 62: leeward side upper header tank
- 63: windward side lower header tank
- 64: leeward side lower header tank
- 65: windward side heat exchange tube
- 66: leeward side heat exchange tube
- 67: outer fin
- 7: air flow passage
- 8: airtight waterproof sheet
- 9: drain pipe (outer discharge structure)
- 10: first drainage hole (first connecting portion)
- 11,12: second drainage hole (second connecting portion)
- 13: drain clearance
- 14: guide inclined groove
- ML: motor rotation axis

### Best Mode for Canying Out the Invention

The best mode for accomplishing a drainage structure for a vehicle air conditioner of the present invention will be described below based on an embodiment 1.

### Embodiment 1

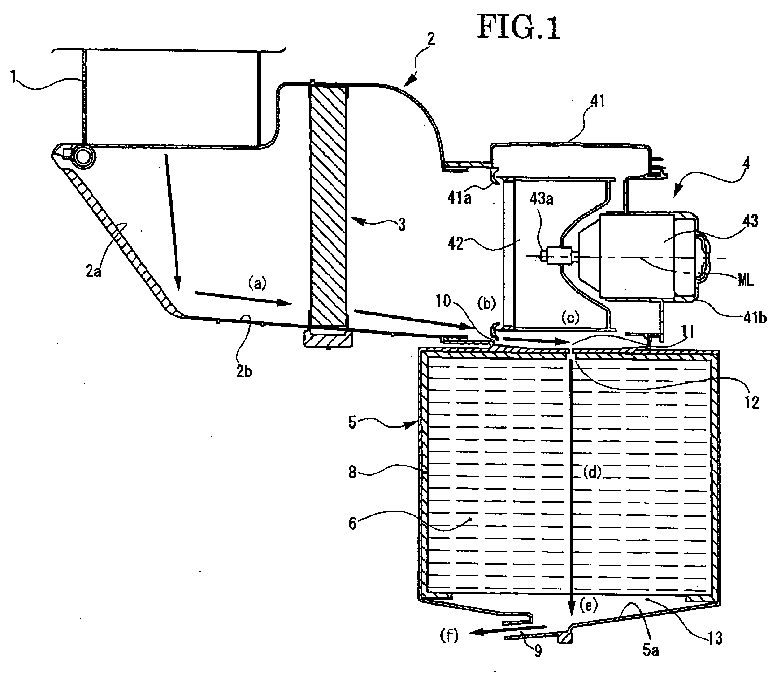

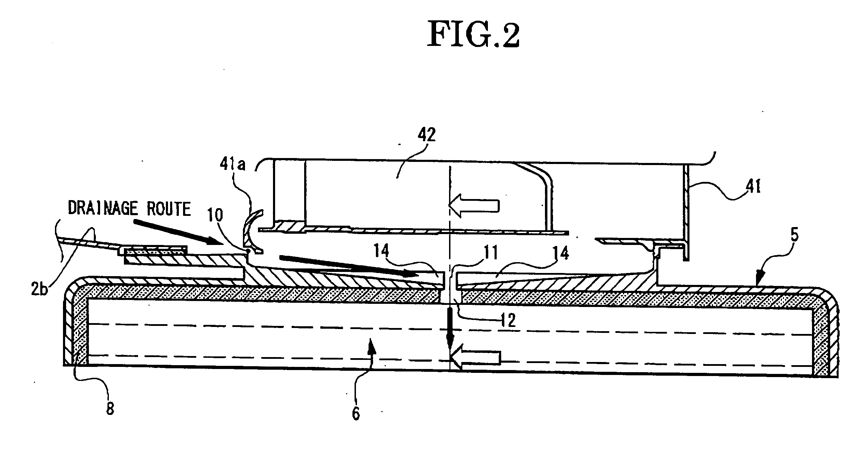

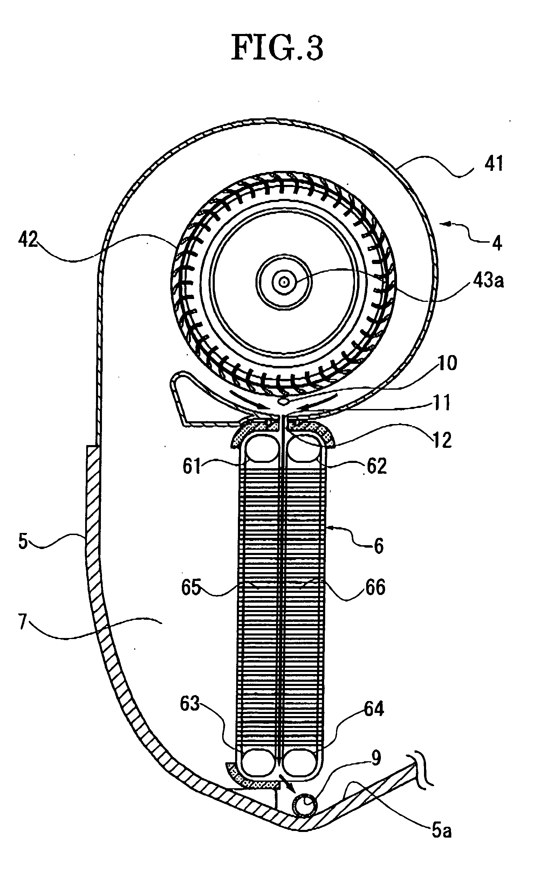

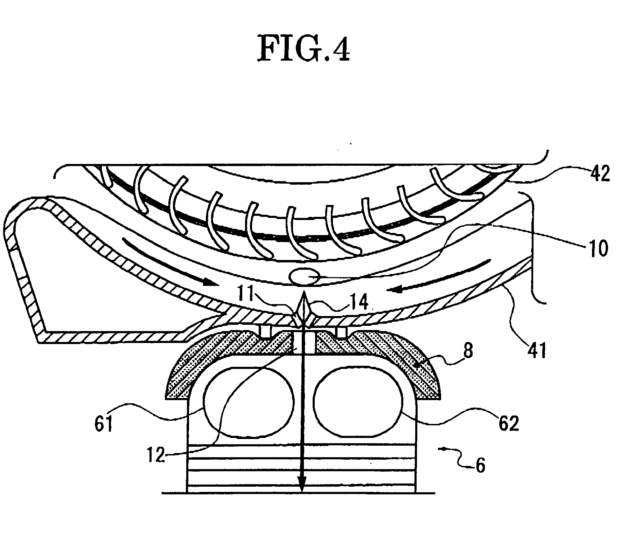

First the structure will be described
Fig. 1 is a sectional view along a direction of a motor rotation axis and showing a vehicle air conditioner to which a drainage structure of an embodiment 1 is applied. Fig. 2 is an enlarged sectional view of first and second connecting portions in Fig. 1 in the drainage structure of the embodiment 1. Fig. 3 is a sectional view along a direction orthogonal to the motor rotation axis and showing the vehicle air conditioner to which the drainage structure of the embodiment 1 is applied. Fig. 4 is an enlarged sectional view of the second connecting portion in Fig. 3 in the drainage structure of the embodiment 1.

The vehicle air conditioner to which the drainage structure of the embodiment 1 is applied includes an inside and outside air introducing duct 1, an intake duct 2, a clean filter 3, a centrifugal fan 4, a main body case 5, and an evaporator 6 as shown in Fig. 1.

The inside and outside air introducing duct 1 is provided with an intake door outside the drawing and introduces inside air, outside air, or a mixture of inside and outside air as opening and closing of the intake door is controlled.

The intake duct 2 is a duct coupled to the inside and outside air introducing duct 1 to suck at least one of the inside air and the outside air and the clean filter 3 for removing dust, pollen, and the like is disposed in a middle of the intake duct 2 as shown in Fig. 1.
A bottom wall surface of the intake duct 2 has a first inclined bottom wall surface 2a directly below the inside and outside air introducing duct 1 and having a steep inclination angle and a second inclined bottom wall surface 2b extending toward the centrifugal fan 4 and having a gentle inclination angle.

The centrifugal fan 4 is a fan through which gas passes radially from a center of an impeller and is **characterized in that** it has high static pressure and air blow pressure because it sends air while providing centrifugal force to the gas with rotation of the impeller. The centrifugal fan 4 in the embodiment 1 is of a multiblade fan (sirocco fan) type and is formed of a scroll casing 41, a blower fan 42, and a fan motor 43 as shown in Fig. 1.

The intake duct 2 is coupled to a suction side of the scroll casing 41 and an annular bell mouth portion 41a is formed at a suction position of the blower fan 42 as shown in Fig. 1. The scroll casing 41 is formed with a motor support portion 41b for supporting the fan motor 43 as shown in Fig. 1. The scroll casing 41 has a winding angle of about 300° and a water pool space is formed due to the large winding angle in a lower portion of the scroll casing 41 as shown in Fig. 3.

The blower fan 42 has a large number of blades arranged on a circumference and is coupled to a motor shaft 43a of the fan motor 43 as shown in Fig. 3.

The fan motor 43 is a drive source for driving the blower fan 42 for rotation and a motor rotation axis ML is oriented horizontally as shown in Fig. 1.

The main body case 5 (or an air-conditioning case) is a case for housing the evaporator 6, an air mix door and a heater core outside the drawing, or the like. As shown in Fig. 3, an air flow passage 7 is formed in a portion of the case 5 communicating with a discharge side of the scroll casing 41.

The evaporator 6 is an evaporator interposed in a refrigeration cycle of the vehicle air conditioner, is disposed in a middle of the air flow passage 7, carries out heat exchange between a refrigerant flowing inside and air flowing outside, and evaporates and gasifies the refrigerant to cool the air. An outer periphery of the evaporator 6 is surrounded with an airtight waterproof sheet 8 as shown in Fig. 1.

Next, the drainage structure in the embodiment 1 for discharging, to the outside, water flowing along the inclined bottom wall surfaces 2a, 2b of the intake duct 2 will be described.

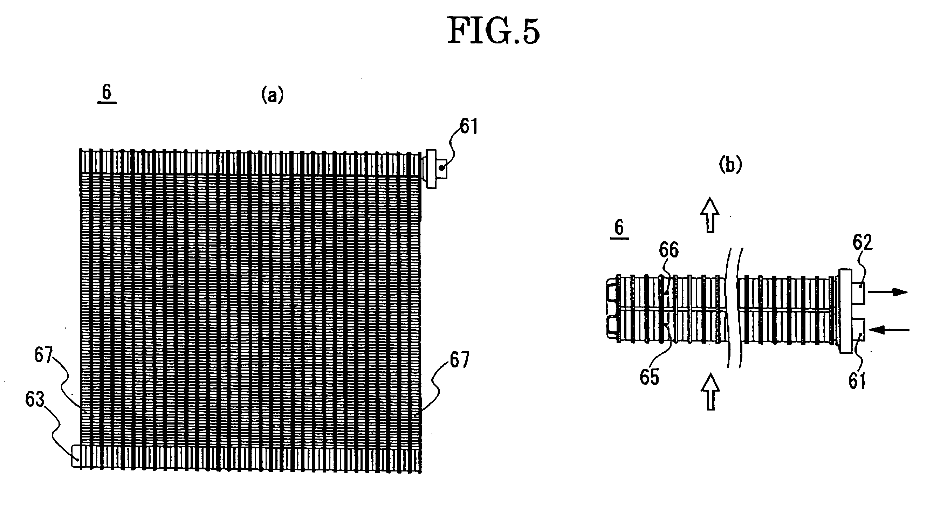

The drainage structure of the embodiment 1 is formed by providing the first connecting portion for connecting the inclined bottom wall surfaces 2a, 2b of the intake duct 2 and the lower portion of the scroll casing 41 of the centrifugal fan 4 and the second connecting portions for connecting the lower portion of the scroll casing 41 and an upper portion of the evaporator 6.
The drainage structure of the embodiment 1 includes a drain pipe (outer discharge structure) 9 that is an existing outer discharge structure originally provided to a drain pan portion 5a of the main body case 5 for housing the evaporator 6 in order to discharge, to the outside, condensate water attached to outer fins (see Fig. 5(a)) 67 of the evaporator 6.

The first connecting portion is a first drainage hole 10 for connecting the inclined bottom wall surfaces 2a, 2b of the intake duct 2 and the lower position of the scroll casing 41 in a direction of the motor rotation axis ML of the centrifugal fan 4. The first drainage hole 10 is formed in the bell mouth portion 41 a of the scroll casing 41 as shown in Figs. 1, 2, and 4.

As shown in Figs. 1 to 4, the second connecting portions are second drainage holes 11, 12 for aligning the lower position of the scroll casing 41 and the upper position of the evaporator 6 with each other and connecting both the positions in the direction orthogonal to the motor rotation axis ML of the centrifugal fan 4. The second drainage hole 11 is formed in the scroll casing 41 (or the main body case 5) and the second drainage hole 12 is formed in the airtight waterproof sheet 8 and in a position aligned with the second drainage hole 11.

The evaporator 6 is disposed vertically with its heat exchange surface parallel to the motor rotation axis ML of the centrifugal fan 4 as shown in Figs. 1 and 3. Opposite faces and an upper face of the outer peripheral face of the evaporator 6 are fixed in an airtight and waterproof state to inner wall faces of the main body case 5 with the airtight waterproof sheet 8 interposed therebetween and a drain clearance 13 communicating with the drain pipe 9 is formed only under the lower face as shown in Fig. 1.

The first drainage hole 10 and the second drainage hole 11 are connected by a guide inclined groove 14 sloping downward from the first drainage hole 10 toward the second drainage hole 11 as shown in Figs. 2 and 4.

Next, a structure of the evaporator 6 in the drainage structure in the embodiment 1 will be described.

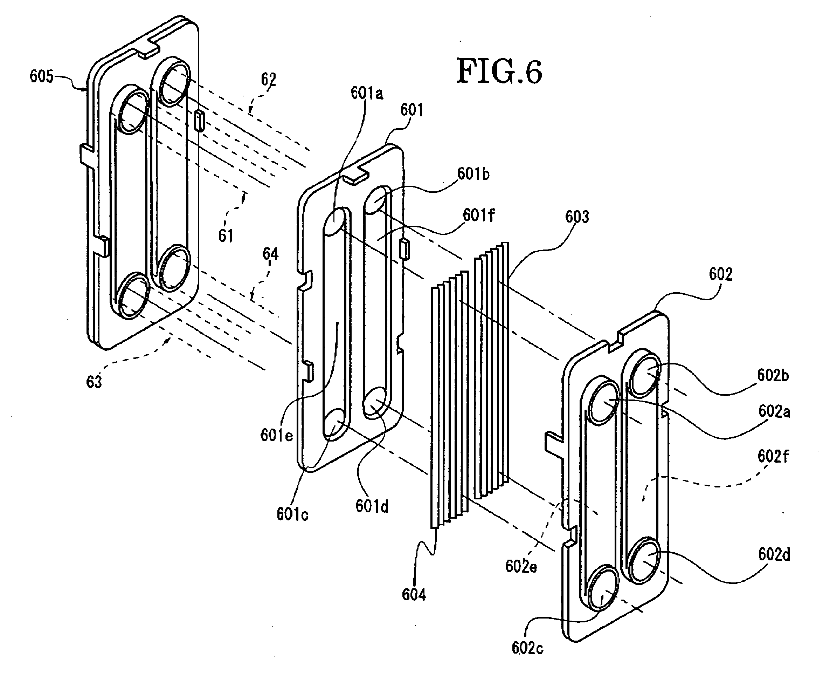

Figs. 5(a) and 5(b) are a front view and a plan view of the evaporator in the drainage structure in the embodiment 1. Fig. 6 is an exploded perspective view of the evaporator in the drainage structure in the embodiment 1.

The evaporator 6 includes a windward side upper header tank 61, a leeward side upper header tank 62, a windward side lower header tank 63, a leeward side lower header tank 64, windward side heat exchange tubes 65, leeward side heat exchange tubes 66, and the outer fins 67 as shown in Figs. 5(a) to 6.

The evaporator 6 is a laminated heat exchanger formed by laminating a large number of lamination unit members 605 each formed of a pair of plate-shaped members 601, 602 and a pair of heat exchange facilitating fins 603, 604 as shown in Fig. 6.
Therefore, the windward side upper header tank 61 is formed by laminating a large number of tank holes 601a, 602a formed in the pair of plate-shaped members 601, 602. The leeward side upper header tank 62 is formed by laminating a large number of tank holes 601b, 602b formed in the pair of plate-shaped members 601, 602. The windward side lower header tank 63 is formed by laminating a large number of tank holes 601c, 602c formed in the pair of plate-shaped members 601, 602. The leeward side lower header tank 64 is formed by laminating a large number of tank holes 601d, 602d formed in the pair of plate-shaped members 601, 602.
The windward side heat exchange tube 65 is formed by sandwiching the heat exchange facilitating fin 603 between refrigerant passages 601e, 602e formed in the pair of plate-shaped members 601, 602. The leeward side heat exchange tube 66 is formed by sandwiching the heat exchange facilitating fin 604 between refrigerant passages 601f, 602f formed in the pair of plate-shaped members 601, 602.

The windward side upper header tank 61 is a refrigerant outlet and the leeward side upper header tank 62 is a refrigerant inlet. Both the upper header tanks 61, 62 are disposed side by side with a clearance left therebetween as shown in Fig. 6. The windward side lower header tank 63 and the leeward side lower header tank 64 are tanks having closed opposite end portions and both the lower header tanks 63, 64 are arranged side by side with a clearance left therebetween as shown in Fig. 6.

The windward side heat exchange tube 65 connects the windward side upper header tank 61 and the windward side lower header tank 63. The leeward side heat exchange tube 66 connects the leeward side upper header tank 62 and the leeward side lower header tank 64. The windward side heat exchange tube 65 and the leeward side heat exchange tube 66 are arranged side by side with a clearance left therebetween as shown in Fig. 5(b). A large number of outer fins 67 arc installed horizontally outside the laminated lamination unit members 605 as shown in Fig. 5(a).

In the drainage structure in the embodiment 1, as shown in Fig. 3, water led to the upper portion of the evaporator 6 through the second drainage holes 11, 12 is led through the clearance between the windward side upper header tank 61 and the leeward side upper header tank 62, the clearance between the windward side heat exchange tube 65 and the leeward side heat exchange tube 66, and the clearance between the windward side lower header tank 63 and the leeward side lower header tank 64 and discharged outside from the drain pipe 9 provided to the main body case 5.

Next, operation will be described.

### [BACKGROUND TECHNIQUE]

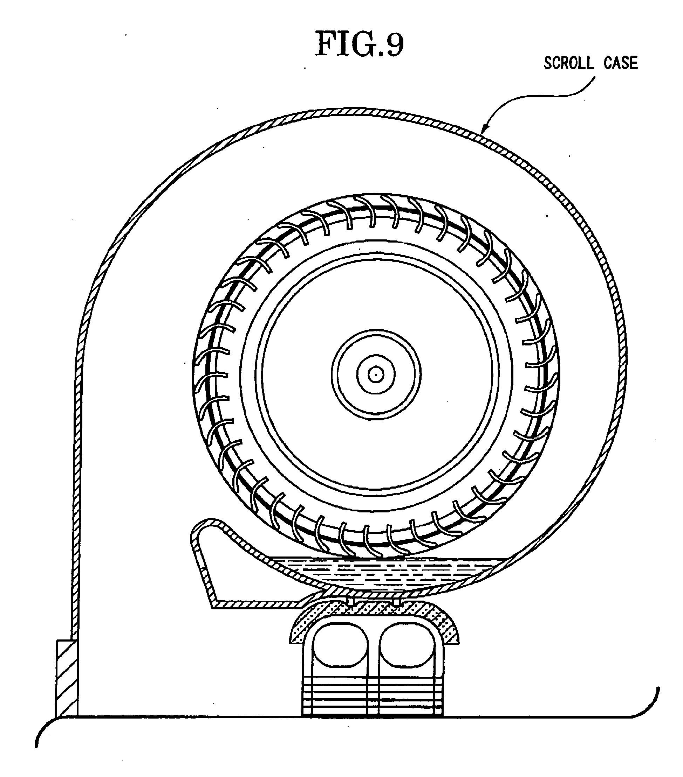

In the vehicle air conditioner having the winding angle of the scroll casing of about 300° and using the centrifugal fan with the motor disposed horizontally, if snow or drops of water attached to the intake duct or the scroll casing is (are) stored in the lower portion of the scroll casing as shown in Fig. 9 by the vehicle layout and the stored water freezes, it may cause damage to the fan.

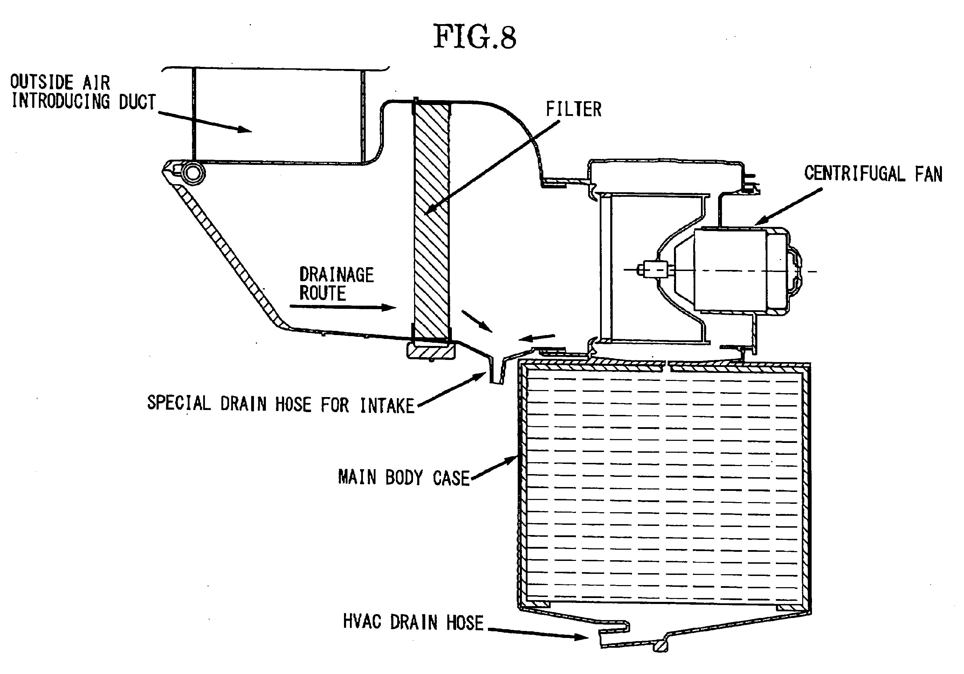

Therefore, in order to secure drainage of the water flowing along the bottom wall surface of the intake duct and the water stored in the lower portion of the scroll casing, a drainage part such as a special drain hose for the intake is added to the lower portion of the intake duct as shown in Fig. 8.

In the prior-art drainage structure shown in Fig. 8, however, the special drain hose for the intake need be provided to the intake duct As an air-conditioning unit, two drainage structures, i.e., the special drain hose for the intake and an HVAC drain hose are provided.
HVAC stands for Heating, Ventilating and Air-Condiuoning System.

Proposed to respond to this problem is the vehicle air conditioner described in Japanese Patent Application Laid-open No. 2004-98782. This proposed apparatus is provided with the guide passage for guiding the water stored in the bottom wall portion of the intake duct into the blower by differential pressure between the blower and the intake duct. In this way, during operation of the blower, the blower blows the water guided into the blower by the differential pressure. Then, the water is captured by the evaporator and discharged from the drain pipe below the evaporator as the condensate water.

However, the proposed apparatus discharges, to the outside, the water guided into the blower by using air blow obtained by operation of the blower and therefore it is impossible to discharge, to the outside, the water guided into the blower when the blower is in a nonoperating state.

Therefore, there is provided the drainage structure for the vehicle air conditioner in the embodiment 1 that has the simple structure without the additional drain structure and can discharge, to the outside, the water trying to stay in the lower portion of the scroll casing whether or not the centrifugal fan is operating.

### [Drainage Operation during a Nonoperating State of the Centrifugal Fan]

The drainage operation during the nonoperating state of the centrifugal fan with the drainage structure for the vehicle air conditioner in the embodiment 1 will be described based on Figs. 1 to 4.
During the nonoperating state of the centrifugal fan 4, the water introduced into the intake duct 2 is discharged outside after going through the following process.

(1) If snow or drops of water attached to or mixed into the intake duct 2 turns (turn) into water, the water flows along the inclined bottom wall surfaces 2a, 2b toward the lower portion of the scroll casing 41 of the centrifugal fan 4 on a downstream side as shown in a portion (a) in Fig. 1.

(2) The water flowing toward the lower portion of the scroll casing 41 passes through the first drainage hole 10 from the inclined bottom wall surfaces 2a, 2b and is led to the lower portion of the scroll casing 41 of the centrifugal fan 4 as shown in a portion (b) in Fig. 1.
Here, the first drainage hole 10 and the second drainage hole 11 are connected by the guide inclined groove 14 sloping downward from the first drainage hole 10 toward the second drainage hole 11. Therefore, the water from the first drainage hole 10 is gathered into the guide inclined groove 14 as shown in FIG. 2 and drops of water adhered to an inner face of the scroll casing 41 and condensed to water are also gathered into the guide inclined groove 14 as shown in Figs. 3 and 4. In other words, the water gathered into the guide inclined groove 14 is led to the lower portion of the scroll casing 41 of the centrifugal fan 4.

(3) The water led to the lower portion of the scroll casing 41 of the centrifugal fan 4 is led to the upper portion of the evaporator 6 from the lower portion of the scroll casing 41 through the second drainage holes 11, 12 as shown in a portion (c) in FIG 1.

(4) The water led to the upper portion of the evaporator 6 runs down the evaporator 6 from the upper portion of the evaporator 6 as shown in a portion (d) in FIG. 1.
Here, because the laminated heat exchanger having the clearance in its longitudinal middle position is used as the evaporator 6, the water led to the upper portion of the evaporator 6 passes through the clearance between the windward side upper header tank 61 and the leeward side upper header tank 62, the clearance between the windward side heat exchange tube 65 and the leeward side heat exchange tube 66, and the clearance between the windward side lower header tank 63 and the leeward side lower header tank 64 as shown in FIG. 3. In other words, the clearances in the evaporator 6 having the structure of the laminated heat exchanger are utilized as a drainage passage.

(5) The water running down the evaporator 6 from the upper portion of the evaporator 6 is gathered into the drain pan portion 5a of the main body case 5 as shown in a portion (e) in FIG. 1.

(6) The water gathered into the drain pan portion 5a of the main body case 5 is discharged outside through the drain pipe 9 of the main body case 5 for discharging the condensate water of the evaporator 6 as shown in a portion (f) in FIG 1.

As described above, in the drainage structure of the embodiment 1, the existing drain pipe 9 for discharging the condensate water of the evaporator 6 is utilized to discharge the water outside. As a result, only the first drainage hole 10 and the second drainage holes 11, 12 need be added and a new drain structure need not be added, which makes the drainage structure simple.
In this way, a degree of freedom in layout can be increased as compared with the case in which a drainage part such as a special drain hose for the intake is added.
Moreover, it is possible to discharge, to the outside via the shortest route, the water trying to stay in the lower portion of the scroll casing 41 even in the nonoperating state of the centrifugal fan 4 as described above.

### [Drainage operation during Operation of the Centrifugal Fan]

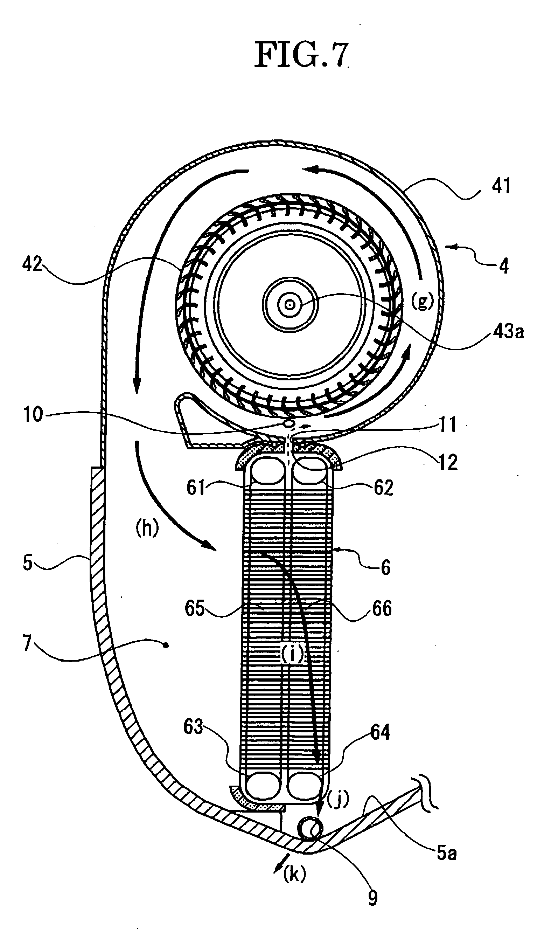

Drainage operation in the nonoperating state of the centrifugal fan in the drainage structure for the vehicle air conditioner in the embodiment 1 will be described based on Figs. 1 and 7.
During operation of the centrifugal fan 4, water introduced into the intake duct 2 and drops of water attached to the inner face of the scroll casing 41 are discharged outside after going through the following process.

(1) If the snow or drops of water attached to or mixed into the intake duct 2 turns (turn) into water, the water flows along the inclined bottom wall surfaces 2a, 2b toward the lower portion of the scroll casing 41 of the centrifugal fan 4 on the downstream side as shown in the portion (a) in FIG. 1.

(2) The water flowing toward the lower portion of the scroll casing 41 passes through the first drainage hole 10 from the inclined bottom wall surfaces 2a, 2b and is led to the lower portion of the scroll casing 41 of the centrifugal fan 4 as shown in the portion (b) in FIG. 1.

(3) The water led to the lower portion of the scroll casing 41 of the centrifugal fan 4 is led along the inner face of the scroll casing 41 by fan air pressure as shown in a portion (g) in Fig. 7.
At this time, drops of water attached to the inner face of the scroll casing 41 are similarly led along the inner face of the scroll casing 41 by the fan air pressure.

(4) The water led along the inner face of the scroll casing 41 passes through the air flow passage 7 on the discharge side and is captured by the evaporator 6 as shown in a portion (h) in Fig. 7.

(5) The water captured by the evaporator 6 runs down the evaporator 6 as shown in a portion (i) in Fig. 7.
Here, because the water collides with the outer fins 67 and the windward side heat exchange tube 65 when it is captured by the evaporator 6, the captured water does not get out of the evaporator 6 and runs down the evaporator 6.

(6) The water running down the evaporator 6 is gathered into the drain pan portion 5a of the main body case 5 as shown in a portion (j) in Fig. 7.

(7) the water gathered into the drain pan portion 5a of the main body case 5 is discharged outside through the drain pipe 9 of the main body case 5 for discharging the condensate water from the evaporator 6 as shown in a portion (k) in Fig. 7.

As described above, the drainage structure in the embodiment 1 can discharge, to the outside, the water trying to stay in the lower portion of the scroll casing 41 and the drops of water attached to the inner face of the scroll casing 41 during operation of the centrifugal fan 4 as well.

Moreover, suction negative pressure is produced in the second drainage holes 11, 12 during operation of the centrifugal fan 4 and foreign matter trying to block the second drainage holes 11,12 is removed along the inner face of the scroll casing 41 by the fan air pressure. In this way, drainage of water trying to stay in the lower portion of the scroll casing 41 can be maintained for a long period of time and a foul odor caused by the stagnant water can prevented as well.

Next, effects will be described.
With the drainage structure for the vehicle air conditioner in the embodiment 1, the effects listed below can be obtained.

(1) In the drainage structure for the vehicle air conditioner and including: the intake duct 2 for sucking at least one of inside and outside air; the centrifugal fan 4 to the suction side of which the intake duct 2 is coupled and in which the motor rotation axis ML is oriented horizontally; the evaporator 6 disposed in the middle of the air flow passage 7 communicating with the discharge side of the centrifugal fan 4; and the drain pipe 9 provided to the main body case 5 for housing the evaporator 6 to discharge, to the outside, condensate water attached to the outer fin 67 of the evaporator 6, the drainage structure is provided with the first connecting portion for connecting the bottom wall surface of the intake duct 2 and the lower portion of the scroll casing 41 of the centrifugal fan 4 and the second connecting portion for connecting the lower portion of the scroll casing 41 and the upper portion of the evaporator 6. Therefore, it is possible to discharge, to the outside, the water trying to stay in the lower portion of the scroll casing 41 with the simple structure without an additional drain structure whether or not the centrifugal fan 4 is operating.

(2) The first connecting portion is the first drainage hole 10 for connecting the inclined bottom wall surfaces 2a, 2b of the intake duct 2 and the lower position of the scroll casing 41 in a direction of the motor rotation axis of the centrifugal fan 4, the second connecting portion is the second drainage holes 11, 12 for aligning the lower position of the scroll casing 41 and the upper position of the evaporator 6 with each other and connecting both the positions in a direction orthogonal to the motor rotation axis ML of the centrifugal fan 4, and the evaporator 6 is disposed in the vertical direction with its heat exchange surface parallel to the motor rotation axis ML of the centrifugal fan 4. Therefore, in the nonoperating state of the centrifugal fan 4, it is possible to discharge, to the outside, the water trying to stay in the lower portion of the scroll casing 41 via the shortest route.

(3) The first drainage hole 10 and the second drainage holes 11, 12 are connected by the guide inclined groove 14 sloping downward from the first drainage hole 10 toward the second drainage holes 11, 12. Therefore, it is possible to prevent stagnation of water flowing from the upper position of the evaporator 6 toward the second drainage holes 11, 12 to improve the efficiency of gathering the water toward the second drainage holes 11, 12.

(4) The evaporator 6 includes: the windward side upper header tank 61 and the leeward side upper header tank 62 arranged side by side; the windward side lower header tank 63 and the leeward side lower header tank 64 arranged side by side; and the windward side heat exchange tube 65 and the leeward side heat exchange tube 66 arranged side by side to connect the two windward side header tanks 61, 63 and the two leeward side lower header tanks 62, 64 and the water led to the upper portion of the evaporator 6 through the second drainage holes 11, 12 passes through the clearance between the windward side upper header tank 61 and the leeward side upper header tank 62, the clearance between the windward side heat exchange tube 65 and the leeward side heat exchange tube 66, and the clearance between the windward side lower header tank 63 and the lecward side lower header tank 64 and is discharged outside from the drain pipe 9 provided to the main body case 5. Therefore, in the nonoperating state of the centrifugal fan 4, it is possible to utilize the clearances in the evaporator 6 as drainage passages to smoothly discharge the water from the upper portion of the evaporator 6 along the evaporator 6.

(5) In the drainage structure for the vehicle air conditioner and including: the intake duct 2 for sucking at least one of inside and outside air; the centrifugal fan 4 to the suction side of which the intake duct 2 is coupled and in which the motor rotation axis ML is oriented horizontally; the evaporator 6 disposed in the middle of the air flow passage 7 communicating with the discharge side of the centrifugal fan 4; and the outer discharge structure provided to the main body case 5 for housing the evaporator 6 to discharge, to the outside, the condensate water attached to the outer fin 67 of the evaporator 6, in the nonoperating state of the centrifugal fan 4 and when snow or drops of water attached to or mixed into the intake duct 2 turns (turn) into water to flow along the inclined bottom wall surfaces 2a, 2b, the water is led from the inclined bottom wall surfaces 2a, 2b to the lower portion of the scroll casing 41 of the centrifugal fan 4, led from the lower portion of the scroll casing 41 to the upper portion of the evaporator 6, led from the upper portion of the evaporator 6 down along the evaporator 6, and discharged outside from the drain pipe 9 of the main body case 5 and for discharging the condensate water of the evaporator 6. Therefore, it is possible to discharge, to the outside, the water trying to stay in the lower portion of the scroll casing 41 with the simple structure without an additional drain structure whether or not the centrifugal fan 4 is operating.

Although the drainage structure for the vehicle air conditioner according to the invention has been described above based on the embodiment 1, specific structures are not limited to those in the embodiment 1 and changes in and additions to the design are allowed without departing from the gist of the invention according to respective claims.

Although the first connecting portion is the first drainage hole 10 and the second connecting portions are the second drainage holes 11, 12 in the embodiment 1, drain pipes, drainage channels, or the like may be used as the first connecting portion and the second connecting portions. In short, the first connecting portion is not restricted to that in the embodiment 1 if it connects the bottom wall surface of the intake duct and the lower portion of the scroll casing of the centrifugal fan. The second connecting portions are not restricted to those in the embodiment 1 if they connect the lower portion of the scroll casing and the upper portion of the evaporator.

Although the drain pipe 9 provided to the main body case 5 is shown as an example of the outer discharge structure in the embodiment 1, the drain pipe or the drain hose provided to an air-conditioning case may be used instead.

The embodiment 1 shows the preferable example in which the lower position of the scroll casing 41 and the upper position of the evaporator 6 are aligned with each other, the evaporator 6 is disposed in a vertical direction, and the water can be discharged outside via the shortest route. However, the lower position of the scroll casing and the upper position of the evaporator may not be aligned with each other and both the positions may be connected by a flexible pipe. The evaporator may be disposed in a diagonal direction.

### Industrial Applicability

Although the application to the vehicle air conditioner including the centrifugal fan having the scroll casing with the winding angle of about 300° has been shown in the embodiment 1, the invention can be applied to a vehicle air conditioner including a centrifugal fan having a scroll casing with a 300° or smaller winding angle if the vehicle air conditioner has a structure in which water is stored in a lower portion of the scroll casing.

## Claims

1. A drainage structure for a vehicle air conditioner, comprising:
an intake duct for sucking at least one of inside and outside air;
a centrifugal fan to a suction side of which the intake duct is coupled and in which a motor rotation axis is oriented horizontally;
an evaporator disposed in a middle of an air flow passage communicating with a discharge side of the centrifugal fan;
an outer discharge structure provided to a main body case for housing the evaporator to discharge, to the outside, condensate water attached to an outer fin of the evaporator,
a first connecting portion for connecting a bottom wall surface of the intake duct and a lower portion of a scroll casing of the centrifugal fan; and
a second connecting portion for connecting the lower portion of the scroll casing and an upper portion of the evaporator.

2. A drainage structure for a vehicle air conditioner according to claim 1,
wherein the first connecting portion is a first drainage hole for connecting an inclined bottom wall surface of the intake duct and a lower position of the scroll casing in a direction of the motor rotation axis of the centrifugal fan,
the second connecting portion is a second drainage hole for aligning the lower position of the scroll casing and an upper position of the evaporator with each other and connecting both the positions in a direction orthogonal to the motor rotation axis of the centrifugal fan, and
the evaporator is disposed in a vertical direction with its heat exchange surface parallel to the motor rotation axis of the centrifugal fan.

3. A drainage structure for a vehicle air conditioner according to claim 2,
wherein the first drainage hole and the second drainage hole are connected by a guide inclined groove sloping downward from the first drainage hole toward the second drainage hole.

4. A drainage structure for a vehicle air conditioner according to any one of claims 1 to 3,
wherein the evaporator includes: a windward side upper header tank and a leeward side upper header tank arranged side by side; a windward side lower header tank and a leeward side lower header tank arranged side by side; and a windward side heat exchange tube and a leeward side heat exchange tube arranged side by side to connect the two windward side header tanks and the two leeward side lower header tanks and
the water led to the upper portion of the evaporator through the second connecting portion passes through a clearance between the windward side upper header tank and the leeward side upper header tank, a clearance between the windward side heat exchange tube and the leeward side heat exchange tube, and a clearance between the windward side lower header tank and the leeward side lower header tank and is discharged outside from the outer discharge structure provided to the main body case.

5. A drainage structure for a vehicle air conditioner, comprising:
an intake duct for sucking at least one of inside and outside air;
a centrifugal fan to a suction side of which the intake duct is coupled and in which a motor rotation axis is oriented horizontally;
an evaporator disposed in a middle of an air flow passage communicating with a discharge side of the centrifugal fan; and
an outer discharge structure provided to a main body case for housing the evaporator to discharge, to the outside, condensate water attached to an outer fin of the evaporator,
wherein, in a nonoperating state of the centrifugal fan and when snow or drops of water attached to or mixed into the intake duct turns (turn) into water to flow along a duct bottom wall surface, the water is led from the duct bottom wall surface to a lower portion of a scroll casing of the centrifugal fan, led from the lower portion of the scroll casing to the upper portion of the evaporator, led from the upper portion of the evaporator down along the evaporator, and discharged outside from the outer discharge structure of the main body case and for discharging the condensate water of the evaporator.
